# EUROPEAN PATENT SPECIFICATION

(11) **EP 1 584 655 B1**
(45) Date of publication and mention of the grant of the patent: **22.06.2011**
(21) Application number: 03782949.6
(22) Date of filing: 26.12.2003
(51) Int. Cl.: C08L 27/12

(54) **FLUORORESIN COMPOSITION**
FLUORHARZZUSAMMENSETZUNG
COMPOSITION DE FLUORORESINE

(30) Priority: 27.12.2002 JP 2002379066
(43) Date of publication of application: 12.10.2005
(73) Proprietor: DUPONT-MITSUI FLUOROCHEMICALS CO., LTD., Tokyo 101-0064 (JP)
(72) Inventor: MIZUBUCHI, Kazuo, Shizuoka-shi, Shizuoka 424-0001 (JP); TANIMURA, H., Matsushita Electric Ind. Co, Ltd., Kadoma-shi, Osaka 571-8501 (JP)
(74) Representative: Benson, John Everett
(86) International application number: PCT/JP2003/017007
(87) International publication number: WO 2004/060995

(56) References cited:
- EP-A1- 0 590 488
- JP-A- 3 293 796
- JP-A- 5 117 447
- JP-A- 5 140 452
- JP-A- 5 247 351
- JP-A- 5 306 371
- JP-A- 5 339 593
- JP-A- 6 200 280
- JP-A- 2000 302 306
- US-A- 5 498 654
- US-B1- 6 255 380

## Description

The present invention relates to a fluororesin composition suitable for molding of sliding mechanic parts etc. In more precisely it relates to a fluororesin composition which has lubricity, and further superior friction and wearing resistance and compression creep resistance.

In the field of precision machines such as computer-related devices, office equipment or audio visual system related devices, etc., much plastic products having sliding property are used for parts such as gears, bearings, sleeves, rolls, rails. In the past, such sliding parts were molded using a thermoplastic resin such as polyolefin, polyamide, fluororesin, ABS resin and polyphenylene sulfide; a thermosetting resin such as epoxy resin and phenolic resin; or a resin composition combined filler such as glass fiber, carbon fiber and mica with such resins for raw materials, and various shapes of products have been produced.

However, as use conditions of those parts become severe, parts which have not only lubricity and heat resistance but also is hard to be worn due to friction and is hard to be deformed even under strong stress have been demanded. By the way, there is a description that resin composition containing zinc oxide whisker as filler can be used for molding materials of electricity parts because it is superior in static electricity diffusion property and sliding property, in Japanese Patent No. 3041071. However, from a point of view to wearing resistance and compression creep resistance, more improvement to the molded materials is demanded.

EP 0 590 488 A1 relates to a multilayered sliding member comprising a lubricating composition comprising poly-tetrafluoroethylene and 1 to 40% of (i) zinc oxide whiskers or (ii) zinc oxide whiskers and fibrous magnesium oxysulfate, fan-shaped magnesium oxysulfate or a mixture thereof used as a filler; and a porous sintered metal layer formed on a steel backing, the lubricating composition being impregnated in and coated on the porous sintered metal layer formed on a steel backing. The poly-tetrafluoroethylene which is used as a main component of the lubricating composition is said to usually be a fine powder, but is not indicated to be obtainable by suspension polymerisation.

JP 05-247351 relates to a resin which is blended with 10-80wt.% zinc oxide whiskers having a length of 3-200µm from the base to the top of the needle-like crystal and 2-30wt.% of an additive such as powdery HDPE or powdery PTFE. However, there is no mention in this document of the use of tetrapad-shaped whiskers nor of the use of suspension polymerisation to produce a tetrafluoroethylene polymer.

The object of the present invention is to provide a resin composition suitable for molding of sliding parts that have lubricity and heat-resistant property and is further superior in friction and wearing resistance and compression creep resistance.

The present invention relates to a fluororesin composition suitable for moulding of sliding mechanic parts which comprises a tetrafluoroethylene polymer selected from homopolymers of tetrafluoroethylene and tetrafluoroethylene copolymers said polymer being a powder having an average particle size of not more than 100 µm obtainable by suspension polymerisation of tetrafluoroethylene and not more than 1% by weight of copolymerisable co-monomers, a zinc oxide whisker and a filler selected from granular fillers having an average particle size of not more than 200µm and fibrous fillers having an average fiber length of not more than 500µm, the filler being at least one substance selected from carbon fiber, coke powder, graphite powder, bronze powder, copper powder, talc, glass fiber and molybdenum disulfide, wherein the zinc oxide whisker contains tetrapod-shaped particles.

The fluororesin composition preferably contains 20 to 90% by weight of the tetrafluoroethylene polymer, 5 to 40% by weight of the zinc oxide whisker and 2 to 40% by weight of filler, the total quantity of above three components being 100% by weight.

Such a resin composition is superior in lubricity, heat-resistance, abrasion resistance to friction and compression creep resistance.

The present invention also relates to the use of a fluororesin composition of the invention for moulding of sliding mechanic parts.

### Preferable embodiments to implement the present invention

The present invention provides a fluororesin composition comprising tetrafluoroethylene polymer, zinc oxide whisker, and granular filler having average particle size of not more than 200µm and/or fibrous filler having average fiber length of not more than 500µm.

The tetrafluoroethylene polymer used in the present invention is a homopolymer of tetrafluoroethylene (TFE) or tetrafluoroethylene copolymer obtained by copolymerizing TFE with copolymerizable monomers in the amount of not more than 1.0% by weight. As the copolymerizable monomers, there can be used perfluoroalkene having 3 to 6 carbon atoms such as hexafluoro propylene; perfluoro (alkyl vinyl ether) containing alkyl groups having 1 to 6 carbon atoms such as perfluoro (propyl vinyl ether); or chlorotrifluoroethylene, etc.

Both homopolymer and the above-mentioned copolymer of TFE do not have melt-processability under usual meltprocessing conditions because they have high melting point.

The tetrafluoroethylene polymer can be used as molded articles for sliding parts, electric and electronic parts, packing materials, etc. as far as it has the molecular weight that can be molded with compression molding and others. For example, when the property is shown by melting point instead of molecular weight, polymer having melting point of about 327 °C can be used suitably as molding resin for sliding parts which show good mechanical strength and heat resistance.

In addition, the tetrafluoroethylene polymers are used in powder state for molding of various products. And the average particle size of the tetrafluoroethylene polymer is in a range of not more than 100µm, preferably 5 to 10µm, more preferably 10 to 50µm.

The tetrafluoroethylene polymer having average particle size in the above range is superior in uniform mixing with the zinc oxide whisker and various types of fillers. Such a tetrafluoroethylene polymer can be produced as powder directly by suspension polymerization.

In the zinc oxide whisker of the present invention, there is no particular limitation in the production method, and can for example, be produced by heat-treating the metal zinc powder having an oxidated membrane on its surface under atmosphere containing oxygen. Thus obtained whisker presents the shape of so-called tetrapod-shaped that needle-shaped crystal was expanded from a center of tetrahedron toward four directions. Length of the needle-shaped part is preferably 3-200µm and a base part diameter of needle-shaped part is preferably 0.1-10µm.

Zinc oxide whisker containing such a tetrapod-shaped whisker does not affect properties such as lubricity, wearing resistance or compression creep resistance even when a needle-shaped part is partially damaged during mixing with each component constituting the resin composition or during molding the resin composition.

Further, the surface of the zinc oxide whisker can be treated with a silane-based, a chrome-based or a titanium-based coupling agent. When the surface of the zinc oxide whisker is treated with the silane-based coupling agent in particular, dispersibility of the whisker into tetrafluoroethylene polymer particle can be improved. Such a tetrapod-shaped zinc oxide whisker is commercially available in the market, for example, with trade name of Pana-Tetra from Matsushita Electric Industrial Co., Ltd., and can be obtained and used easily.

The above mentioned zinc oxide whisker contributes to formation of composition having low anisotropy strengthened three dimensionally by the peculiar shape, and the molded articles showing good dimensional stability can be produced from the composition.

In addition, since the zinc oxide whisker itself shows good electroconductivity and thermalconductivity, it can effectively radiate frictional heat generated when the molded articles is slid. It seems that the feature of the zinc oxide whisker is combined with various characteristics of other fillers used together to generate synergistic effects and consequently enhance friction and wearing resistance and compression creep resistance.

Furthermore, the Mohs hardness degree of the zinc oxide whisker is about 4 and this shows zinc oxide comparatively soft material, so it is possible to reduce wear of partner soft material and also to reduce self wear, and further to prevent a performance decline due to the damage caused by extrusion deformation of the articles.

In the present invention, the filler combined with the tetrafluoroethylene polymer in conjunction with zinc oxide whisker is inorganic substances or organic substances, and has the average particle size of not more than 200µm, preferably 2 to 50µm and/or average fiber length of not more than 500µm.

As filler of the present invention, at least one substance is selected from the group of carbon fiber, coke powder, graphite powder, bronze powder, copper powder, talc, glass fiber, and molybdenum disulfide. Above all, a carbon fiber, coke powder, graphite powder, bronze powder, copper powder, talc and glass fiber are preferable. In the present invention, if fillers have the above average particle size and/or the average fiber length, commercially available products can be used as they are.

As for ratios of each component constituting resin compositions, it is desirable that the tetrafluoroethylene polymer is preferably in the range of 20-90% by weight, more preferably 25-80% by weight, the zinc oxide whisker is preferably in the range of 5-40% by weight, more preferably 10-30% by weight and the filler is preferably in a range of 2-40% by weight, more preferably 10-35% by weight. Total quantity of above three components becomes 100% by weight here. When each component is in the above range, the resin composition showing excellent superior friction and wearing resistance and compression creep resistance while retaining good lubricity can be obtained, and the compositions are suitable for molding of sliding parts.

Stabilizers and additives such as anti-oxidants, thermal stabilizers, weather stabilizers, flame retardants, pigments can be combined with the resin compositions to the extent that they do not impair the object of the present invention.

By mixing powder uniformly, to which the above stabilizers or additives are added as required, with three components of the present invention using conventionally known mixing device such as Henshel mixer, powdery resin composition can be obtained.

From such a powdery resin composition, various sliding parts as required can be produced by compression molding method or extrusion molding method.

For example, the above resin composition is preformed by compression molding method and sintered at the temperature over melting point of the tetrafluoroethylene polymer to form molded materials. Then the materials are shaped by curving etc. in accordance with the required article to form the final parts.

Since the resin compositions of the present invention are composed with the zinc oxide whisker and at least one kind of fillers are dispersed uniformly in the tetrafluoroethylene polymer, the resin composition maintains good lubricity and further shows excellent friction and wearing resistance and compression creeping resistance.

In addition, the resin compositions have stable static electricity diffusibility and are suitable as raw resin materials for various kinds of sliding parts, electric and electronic parts, packing materials, etc.

### Examples

The present invention will be explained by using examples in more detail but it is not limited to the examples.
At first, raw materials used are shown below.
(a)Tetrafluoroethylene homopolymer: It is abbreviated PTFE.
   Average particle size 35µm, Melting point 327°C
   Product from DuPont · Mitui Fluorochemicals Co, Ltd.
   Grade name: Teflon (registered trade mark) 7-J
(b) Zinc oxide whisker:
   Diameter of a needle-shaped staple fiber 0.2 to 30µm,
   Length of a needle-shaped staple fiber 2 to 50µm.
   Product from Matsushita Electric Industrial Co., Ltd.
   Trade name: Pana-Tetra
(c) Carbon fiber:
   Average fiber diameter 14.5µm, Average fiber length 120µm
   Product from Kureha Chemical Industry Co. Ltd.
(d) Copper powder:
   Average particle size 26µm
   Product from Fukuda Metal Foil & Powder Co. Ltd.
(e) Graphite powder:
   Average particle size 20µm
   Product from Oriental Sangyo Co. Ltd.
(f) Cokes powder:
   Average particle size 20µm
   Product from Nippon Carbon Co. LTD
(g) Glass fiber:
   Average fiber diameter 10.5µm, Average fiber length 20µm
   Nitto Boseki Co. Ltd.

### (Examples 1 to 5) (Comparative Examples 1 to 5)

The tetrafluoroethylene homopolymer, zinc oxide whisker and various fillers are used at table 1 and they mixed uniformly using Henshell mixer to obtain the resin compositions.

Each resin composition obtained was preformed under pressure of 700MPa and then sintered at 370°C for three hours to obtain a cylinder-shaped molded article of a diameter of 50mm height of 100mm.

Wearing loss, compression creeping property and sliding temperature of each molded article were measured by test methods mentioned below and the results are shown in Table 1.

### (1) Wearing loss:

A ring having outer diameter of 25.7mm, inner diameter of 20mm and height of 20mm is prepared from the cylinder-shaped molded article mentioned above and used as a specimen for the test. Wearing loss of the specimen was measured using twin type friction and wearing tester (product from INTESCO Co. Ltd.) in accordance with JIS K7218 (A method). Measurement of wearing loss was conducted by sliding for 24 hours under each wearing test conditions of the partner material, the load and the sliding speed described in table 1. The wearing loss after the test is calculated from coefficient of wearing and coefficient of frictional.

### (2) Compression creeping property:

A cube having side length of 12.7mm was prepared by curving the above cylinder-shaped molded article and was used as a test specimen.

Compression creeping property was measured using six-liked compression creeping tester (product from ORIENTEC Co., Ltd.) in accordance with ASTM D-621 under conditions of measurement temperature at 23°C and load of 140kgf/cm². In table 1, MD shows a compression direction, and CD shows a vertical direction which is a right angle to the compression direction.

Values of deformation show the rests of value that quantity of recovery after 24 hours was deducted from all volume of deformation.

### (3) Sliding temperature:

A tip of thermocouple was set on about 2mm upper parts from the sliding side of the partner material using EFM-3F type machine produced by ORIENTEC Co. Ltd. and measurement was conducted. Table 1

**Table 1**

| | | Ex.1 | Ex.2 | Ex.3 | Ex.4 | Ex.5 | Comp. Ex.1 | Comp. Ex.2 | Comp. Ex.3 | Comp. Ex.4 | Comp. Ex.5 | Comp. Ex.6 | Comp. Ex.7 |
|---|---|---|---|---|---|---|---|---|---|---|---|---|---|
| Resin composition (wt %) | | | | | | | | | | | | | |
| ·PTFE | | 80.0 | 70.0 | 55.0 | 57.0 | 70.0 | 100 | 90.0 | 80.0 | 90.0 | 70.0 | 67.0 | 80.0 |
| ·Zinc oxide whisker | | 10.0 | 15.0 | 20.0 | 10.0 | 10.0 | - | 10.0 | 20.0 | - | - | - | - |
| ·Carbon fiber | | 10.0 | 15.0 | 10.0 | - | - | - | - | - | 10.0 | 15.0 | - | - |
| ·Copper powder | | - | - | 15.0 | - | - | - | 15.0 | - | - | - | - | - |
| · Coke powder | | - | - | - | 31.0 | - | - | - | | - | - | 31.0 | - |
| · Graphite | | - | - | - | 2.0 | - | - | - | 2.0 | - | - | - | - |
| · Glass fiber | | - | | - | - | 20.0 | - | - | - | - | - | - | 10.0 |
| Wearing test result | | | | | | | | | | | | | |
| ·Test condition | | | | | | | | | | | | | |
| | ·Partner material (*) | ADC-12 | ADC-12 | ADC-12 | FC-25 | SS-41 | ADC-12 | ADC-12 | ADC-12 | ADC-12 | ADC-12 | FC-25 | SS-41 |
| | ·Load (kg/cm²) | 8.0 | 8.0 | 8.0 | 6.0 | 6.0 | 8.0 | 8.0 | 8.0 | 8.0 | 8.0 | 6.0 | 6.0 |
| | ·Sliding speed (m/s) | 0.5 | 0.5 | 0.5 | 0.5 | 0.5 | 0.5 | 0.5 | 0.5 | 0.5 | 0.5 | 0.5 | 0.5 |
| ·Wearing coefficient(**)(× 10⁻⁸) | | 14.2 | 11.5 | 4.8 | 9.0 | 7.2 | 2791 | 14.1 | 5.9 | 46.0 | 12.1 | 49.3 | 12.6 |
| ·Friction coefficient (**) | | 0.226 | 0.193 | 0.255 | 0.288 | 0.36 | 0.185 | 0.203 | 0.285 | 0.252 | 0.244 | 0.348 | 0.37 |
| A sliding temperature (°C) | | 76 | 75 | 83 | 78 | 93 | 73 | 80-82 | 88-90 | 95 | 85 | 133 | 143 |
| Compression creeping test result(%) | | | | | | | | | | | | | |
| ·24hour deform (MD) | | 6.4 | 4.9 | 3.5 | 3.5 | 11.2 | 14.0 | 11.0 | 7.7 | 9.4 | 5.8 | 4.1 | 12.4 |
| ·24hours deform (CD) | | 7.6 | 5.3 | 3.2 | 3.1 | 13.3 | 15.8 | 12.1 | 9.5 | 13.2 | 6.0 | 3.9 | 13.7 |
| ·Eternity deformation (MD) | | 3.2 | 2.6 | 1.7 | 1.7 | 6.5 | 7.6 | 6.4 | 4.3 | 5.1 | 3.1 | 1.8 | 7.1 |
| ·Eternity deformation (CD) | | 3.9 | 2.9 | 1.7 | 1.4 | 7.8 | 8.6 | 6.9 | 5.7 | 7.1 | 3.0 | 1.8 | 8.2 |

| | | | | | | | | | | | | | |
|---|---|---|---|---|---|---|---|---|---|---|---|---|---|
| *Partner material: ADC·12 [An aluminum alloy die-casting JIS H5302(1976)] FC [4 kinds of Gray cast iron JIS G5501(1976)] SS-41 [Rolled steel materials for general structure JIS G3101(1976)] **Unit of Friction coefficient and wearing coefficient:cm³ · sec/kg · m - hr | | | | | | | | | | | | | |

As clear from the results of table 1, it is found that since the resin composition of each Examples comprising the tetrafluoroethylene polymer, the zinc oxide whisker and the fillers has extremely good thermal conductivity by contribution of a zinc oxide whisker comparing with resin compositions of each comparative examples that consisted of a tetrafluoroethylene polymer alone or with various fillers, the sliding temperature can be lowered, the coefficient of friction keeps constantly low and the wearing coefficient becomes smaller, and compression creeping property shows a small value.

### Applicability to industries

By the present invention, the resin compositions suitable for molding of sliding parts and others that have lubricity and thermal-resistant property and are further superior in friction and wearing resistance and compression creep resistance.

The resin compositions obtained by the present invention are superior in lubricity, thermal-resistance, friction and wearing resistances and compression creep resistance.

Since the resin compositions of the present invention have the construction that the zinc oxide whisker and at least one kind of fillers are dispersed uniformly in the tetrafluoroethylene polymer, the resin compositions maintain good lubricity and further shows excellent friction and wearing resistances and compression creeping resistance. Therefore the resin compositions have stable static electricity diffusibility and are suitable as resin materials resin for various kinds of sliding parts, electric and electronic parts, packing materials, etc.

## Claims

1. A fluororesin composition suitable for moulding of sliding mechanic parts which comprises a tetrafluoroethylene polymer selected from homopolymers of tetrafluoroethylene and tetrafluoroethylene copolymers said polymer being a powder having an average particle size of not more than 100 µm obtainable by suspension polymerisation of tetrafluoroethylene and not more than 1 % by weight of copolymerisable co-monomers, a zinc oxide whisker and a filler selected from granular fillers having an average particle size of not more than 200µm and fibrous fillers having an average fiber length of not more than 500µm, the filler being at least one substance selected from carbon fiber, coke powder, graphite powder, bronze powder, copper powder, talc, glass fiber and molybdenum disulfide, wherein the zinc oxide whisker contains tetrapod-shaped particles.

2. A fluororesin composition according to claim 1 containing 20 to 90% by weight of the tetrafluoroethylene polymer, 5 to 40% by weight of the zinc oxide whisker and 2 to 40% by weight of filler, the total quantity of above three components being 100% by weight.

3. Use of a fluororesin composition according to claim 1 or 2 for moulding of sliding mechanic parts.

## Patentansprüche

1. Zur Formung von gleitenden mechanischen Teilen geeignete Fluorharzzusammensetzung, die folgendes umfasst: ein Tetrafluorethylen-Polymeres, das aus Homopolymeren von Tetrafluorethylen und Tetrafluorethylen-Copolymeren ausgewählt ist, wobei es sich bei dem Polymeren um ein Pulver mit einer durchschnittlichen Teilchengröße von nicht mehr als 100 µm handelt und die Copolymeren durch Suspensionspolymerisation von Tetrafluorethylen und nicht mehr als 1 Gew.-% copolymerisierbaren Comonomeren erhältlich ist, einen Zinkoxid-Whisker und einen Füllstoff, der aus granulären Füllstoffen mit einer durchschnittlichen Teilchengröße von nicht mehr als 200 µm und faserigen Füllstoffen mit einer durchschnittlichen Faserlänge von nicht mehr als 500 µm ausgewählt ist, wobei es sich beim Füllstoff um mindestens eine Substanz handelt, die aus Kohlenstofffasern, Kokspulver, Graphitpulver, Bronzepulver, Kupferpulver, Talcum, Glasfasern und Molybdändisulfid ausgewählt ist, wobei der Zinkoxid-Whisker tetrapodisch geformte Teilchen enthält.

2. Fluorharzzusammensetzung nach Anspruch 1, enthaltend 20 bis 90 Gew.-% des Tetrafluorethylen-Polymeren, 5 bis 40 Gew.-% des Zinkoxid-Whiskers und 2 bis 40 Gew.-% Füllstoff, wobei die Gesamtmenge der vorstehenden drei Komponenten 100 Gew.-% beträgt.

3. Verwendung einer Fluorharzzusammensetzung nach Anspruch 1 oder 2 zur Formung von gleitenden mechanischen Teilen.

## Revendications

1. Composition de résine fluorée, appropriée pour le moulage de pièces mécaniques glissantes, qui comprend un polymère de tétrafluoroéthylène, choisi parmi les homopolymères de tétrafluoroéthylène et les copolymères de tétrafluoroéthylène, lequel polymère se présente à l'état de poudre présentant une taille moyenne de particules d'au plus 100 µm et peut être préparé par polymérisation en suspension de tétrafluoroéthylène et de comonomères copolymérisables, présents en une proportion d'au plus 1 % en poids, des trichites d'oxyde de zinc, et une charge choisie parmi les charges granulaires présentant une taille moyenne de particules d'au plus 200 µm et les charges fibreuses présentant une longueur moyenne de fibres d'au plus 500 µm, cette charge étant constituée d'au moins un matériau choisi parmi des fibres de carbone, une poudre de coke, une poudre de graphite, une poudre de bronze, une poudre de cuivre, du talc, des fibres de verre, et du disulfure de molybdène, et dans laquelle les trichites d'oxyde de zinc comportent des particules en forme de tétrapode.

2. Composition de résine fluorée, conforme à la revendication 1, qui contient de 20 à 90 % en poids de polymère de tétrafluoroéthylène, de 5 à 40 % en poids de trichites d'oxydes de zinc et de 2 à 40 % en poids de charge, étant entendu que la quantité totale de ces trois composants fait 100 % en poids.

3. Utilisation d'une composition de résine fluorée, conforme à la revendication 1 ou 2, pour le moulage de pièces mécaniques glissantes.
